# NEUE EUROPÄISCHE PATENTSCHRIFT

(11) **EP 2 196 407 B2**
(45) Veröffentlichungstag und Bekanntmachung des Hinweises auf die Entscheidung über den Einspruch: **28.06.2017**
(45) Hinweis auf die Patenterteilung: 18.09.2013
(21) Anmeldenummer: 08105965.1
(22) Anmeldetag: 10.12.2008
(51) Int. Cl.: B65D 85/804, A47J 31/36

(54) **Kapsel und Vorrichtung für die Zubereitung eines Getränks**
Capsule and device for preparing a drink
Capsule et dispositif de préparation d'une boisson

(43) Veröffentlichungstag der Anmeldung: 16.06.2010
(60) Teilanmeldung: 12194738.6
(73) Patentinhaber: Delica AG, 4127 Birsfelden (CH)
(72) Erfinder: Deuber, Louis, 8805 Richterswil (CH)
(74) Vertreter: Hepp Wenger Ryffel AG

(56) Entgegenhaltungen:
- EP-A1- 0 242 556
- EP-B1- 1 654 966
- WO-A-2007/114685
- DE-U1-202005 021 174
- US-A- 5 327 815
- US-A1- 2006 174 769

## Beschreibung

Die Erfindung betrifft eine Kapsel gemäss dem Oberbegriff von Anspruch 1. Derartige Kapseln werden heute verbreitet als Portionenverpackungen für die Zubereitung von beispielsweise Kaffee verwendet. Der Verbraucher muss sich nicht mehr um die Dosierung der richtigen Kaffeemenge kümmern und nach dem Extraktionsvorgang kann die Kapsel samt Inhalt entsorgt werden. Das Kaffeepulver bleibt ausserdem in der geschlossenen Kammer aromadicht verpackt und ist vor Feuchtigkeit geschützt.

Portionenverpackungen in Form von Kapseln sind seit längerer Zeit bekannt und gebräuchlich. Zum Stand der Technik gehören beispielsweise Kapseln, wie sie in der EP 1 101 430 und EP 1 344 722 gezeigt sind. Diese Kapseln zeichnen sich durch eine robuste Bauweise aus, wodurch sie teuer und für bestimmte Perforations- und Brühvorgänge nicht geeignet sind.

Eine gattungsmässig vergleichbare Kapsel zeigt die WO 2008/087099. Die Kapsel verfügt über einen Boden mit einer umlaufenden, nach aussen gerichteten Rinne. Die in der Draufsicht ringförmige Rinne ist in Bezug auf die Bodenmitte am äusseren Rand des Bodens angeordnet. Dabei bildet der etwa ebene Rinnenboden eine penetrierbare Zone für Penetrationsmittel, durch welche während des Brühvorgangs das Extraktionsfluid durchleitbar ist. Neben der Rinne ist ein zentraler, konvex nach aussen gewölbter und im Querschnitt etwa kreisförmiger Bodenabschnitt angeordnet, der durch eine Kraft von aussen nach innen stülpbar ist. Dieser Vorgang erfolgt abrupt und sprunghaft. Eine solche Kapsel weist verschiedene Nachteile auf. Dies hat zur Folge, dass der Boden nicht wie gewünscht in vordefinierter Weise nach innen eingedrückt, sondern ungleichmässig oder asymmetrisch deformiert wird. Ein weiterer Nachteil besteht darin, dass kein variables nach innen Eindrücken des Kapselbodens möglich ist. Die Kapsel lässt nur eine einzige Stellung (zentraler Bodenabschnitt eingestülpt) zu. Das Einsatzgebiet dieser Kapsel ist damit beschränkt.

Die US 2006/0174769 A1 und die DE 20 2005 021174 U1 zeigen ebenfalls Kapseln mit einem deformierbaren Kapselboden.

Im Zuge der fortschreitenden Produktepiraterie sowie den hohen Anforderungen hinsichtlich Produktesicherheit, spielt ausserdem die Garantiefunktion und Fälschungssicherheit eine immer wichtigere Rolle. Ein Anzeigen unerwünschter Manipulationen im Bereich der penetrierbaren Zone am Boden der Kapseln im Sinne einer Garantiefunktion können die bekannten Kapseln nur ungenügend erfüllen.

Es ist deshalb eine Aufgabe der vorliegenden Erfindung, die Nachteile des Bekannten zu vermeiden und insbesondere eine Kapsel der eingangs genannten Art zu schaffen, deren Boden sich auf eine vorteilhafte Art und Weise verformen lässt. Weiter soll sie einen optimierten Brühvorgang ermöglichen, der zu einer Verbesserung der Extraktionsqualität führt. Insbesondere soll sie eine optimale Dichtwirkung des Bodens gegenüber den Penetrationsmitteln beim Brühvorgang gewährleisten. Wünschenswert ist weiter eine Kapsel, die an verschiedene Kammerformen oder Brühsysteme anpassbar ist. Die Kapsel soll bei Bedarf auch mit einer Garantiefunktion ausgerüstet sein und höheren Ansprüchen hinsichtlich Fälschungssicherheit genügen.

Diese Aufgaben werden durch eine Kapsel gelöst, die die Merkmale in Anspruch 1 aufweist. Dadurch, dass der Boden in einer Ruhelage (d.h. im unbelasteten Zustand) zum Vorgeben einer vorzugsweise definierten Deformation wenigstens abschnittsweise balgartig als Faltenbalg ausgestaltet ist, können verschiedene Vorteile erzielt werden.

Dabei kann der Boden der Kapsel durch mechanische Krafteinwirkung von aussen nach innen eindrückbar sein. Mit der erfindungsgemässen Ausgestaltung der Kapsel kann beispielsweise die Eindrücktiefe und Eindrückform des Bodens je nach Einsatzzweck variiert werden. Die besondere Ausgestaltung des Bodens ermöglicht, unterschiedliche Anschlagelemente zu verwenden, welche einem Kapselhalter zugeordnet sind. Der Einsatzbereich der Kapsel lässt sich somit erheblich erweitern. Wegen der balgartigen Ausgestaltung weist der Boden im Verhältnis zur Bodenfläche mehr Wandmaterial auf. Dadurch kann beim Brühvorgang die Dichtwirkung verbessert werden. Die Reduktion des Volumens des Innenbereichs hat weiter Vorteile für die Brühqualität, da die Trockensubstanz (z.B. Kaffeepulver) in der Kammer der Kapsel zuerst (d.h. bevor ein Extraktionsmedium eingeleitet wird) komprimiert wird. Vorteilhaft kann es alternativ sein, wenn der Boden der Kapsel durch hydraulische Krafteinwirkung infolge Einleiten einer Flüssigkeit in die Kammer der Kapsel von innen nach aussen bewegbar ist. In diesem Fall würde sich eine Vergrösserung des Kammervolumens der Kapsel ergeben. Mit der balgartigen Konfiguration des Kapselbodens kann das Kapselkammervolumen praktisch beliebig variiert werden.

Je nach Formgebung des Balgs sowie gegebenenfalls je nach Wahl des Kapselkörpermaterials kann der Boden elastisch oder plastisch im kalten Zustand verformbar sein. Im letzteren Fall ist der Eindrückvorgang nach Wegnahme der Druckkraft nicht mehr reversibel, wodurch eine Einbuchtung verbleibt. Ein Verbraucher erkennt also, wenn an der Kapsel auf unerwünschte Art und Weise im Bereich des Bodens Manipulationen vorgenommen wurden. Die Kapsel kann also auch eine Garantiefunktion aufweisen. Weiterhin ist ein Balg im Boden nicht ohne weiteres herzustellen, wodurch das Produkt relativ fälschungssicher ist.

Der Balg kann sich in Richtung der Bodenebene erstrecken. Theoretisch ist es aber auch denkbar, dass der Balg schräg oder sogar senkrecht zur Bodenebene verlaufen kann.

In der beanspruchten Ausführungsform ist die balgartige Konfiguration des Bodens durch einen Faltenbalg gebildet. Ein solcher Faltenbalg kann im Querschnitt durch den Boden eine Wellenform aufweisen, die alternierend durch nach aussen und nach innen gerichtete V-förmige Rinnen gebildet wird.

Eine vorteilhafte balgartige Konfiguration kann sich dadurch ergeben, wenn der Faltenbalg wenigstens ein Faltenpaar mit zwei in Richtung des Deckels (bzw. nach innen gerichtete) und in einem vorzugsweise spitzen Winkel miteinander verbundene Flankenwände aufweist, die eine innere, die Bodenmitte umlaufende Faltlinie bilden können. Dieser Winkel kann vorteilhaft zwischen 60 und 90° liegen und besonders bevorzugt etwa 80° betragen. Selbstverständlich ist es aber auch denkbar, dass sich die Flankenwände in einem stumpfen Winkel treffen. Insbesondere spitzwinklige Faltenpaare haben den Vorteil, dass sie eine weite Ausdehnung des Bodens nach innen beim Eindrückvorgang zulassen. Die Flankenwände müssen jedoch nicht derart spitz aufeinander zulaufen, dass eine scharfe Kante im Bereich der Faltlinien gebildet wird. Es ist herstellungstechnisch sowie auch für eine einwandfreie Funktion vorteilhaft, wenn im Bereich der Faltlinien eine Abrundung vorliegt.

Der Faltenbalg kann in der Draufsicht in Bezug auf die Bodenmitte spiralförmig ausgestaltet sein. Dabei kann er wenigstens zwei und vorzugsweise wenigstens drei Spiralumgänge aufweisen. Der Faltenbalg kann aber auch eine Mehrzahl von Faltenpaaren aufweisen, deren Faltlinien auf konzentrischen Kreisen liegen können. Vorstellbar wäre aber auch, dass die Faltlinien bei quaderförmigen oder trapezoid-förmigen Kapseln in der Draufsicht jeweils Rechtecke bilden könnten, die vorzugsweise konzentrisch zueinander im Boden der Kapsel angeordnet sind.

Vorteilhaft kann es weiter sein, wenn der Faltenbalg auch schon in der Ruhelage zumindest leicht konkav nach innen oder konvex nach aussen gekrümmt oder gewölbt verläuft. In diesem Fall würden beispielsweise die in der Draufsicht spiralförmigen Faltenpaare oder Faltenlinien eine Helixform bilden. Ein derartig bauchiger Faltenbalg-Boden hat den Vorteil, dass der Eindrückvorgang erleichtert werden kann.

Es wäre sogar theoretisch auch denkbar, dass - anstatt oder zusätzlich zum Boden der Kapsel - die Seitenwand der Kapsel eine balgartige Konfiguration aufweisen könnte. Eine derartige Kapsel könnte für bestimmte Anwendungszwecke vorteilhaft sein. Beispielsweise könnte die Seitenwand wenigstens durch einen Faltenbalg gebildet sein.

Ein weiterer Aspekt der Erfindung betrifft eine Vorrichtung mit der vorgängig bechriebenen Kapsel für die Zubereitung eines Getränks. Die Vorrichtung verfügt über zwei zur Bildung einer Extraktionskammer gegeneinander pressbare Kammerteile. Dabei ist ein Kammerteil als Kapselhalter mit einer Kavität zur Aufnahme der Kapsel und das andere Kammerteil als Schlussteil zum Verschliessen der Kavität ausgebildet. Der Boden der Kavität weist Mittel enthaltend vorzugsweise mehrere Perforationselemente zum Penetrieren des Bodens der Kapsel auf. Das Verschlussteil ist ebenfalls mit einem oder mehreren Penetrationselementen zum Penetrieren des Deckels versehen. Die einander gegenüber liegenden Penetrationselemente sind derart ausgestaltet, dass bei geschlossener Kavität eine darin angeordnete Kapsel am Boden und am Deckel zum Durchleiten einer Flüssigkeit penetrierbar ist.

Eine bevorzugte Ausführungsform der Vorrichtung kann derart ausgestaltet sein, dass die der Kavität zugeordneten Penetrationselemente im Bereich des balgartigen Abschnitts des Bodens den Boden angreifen bzw. penetrieren können. Die Penetrationselemente können im Bereich des Faltenbalgs den Boden angreifen.

Die der Kavität zugeordneten Penetrationselemente können vorzugsweise gleichmässig verteilt auf einem Kreis liegend auf dem Boden der Kavität angeordnet sein. Der Boden kann einen als zentrale Erhöhung ausgestalteten Stempel aufweisen, um den herum die Penetrationselemente angeordnet sein können. Die Erhöhung kann zylindrisch oder kegelstumpfförmig ausgestaltet sein. Sie kann weiterhin eine vorzugsweise zur Bodenebene etwa planparallel verlaufende Oberseite aufweisen, die einen Anschlag für einen korrespondierenden Zapfen der Kapsel bilden kann. Auf dem Stempel kann eine Schraubendruckfeder angeordnet sein, deren freies Ende an den Boden einer gegen den Boden der Kavität pressbaren Kapsel anlegbar ist.

Die Penetrationselemente können sich zu einer Spitze oder zu einer Schneide verjüngende Körper aufweisen. Dieser Körper kann mit Filteröffnungen versehene Seitenflächen aufweisen, wobei die Filteröffnungen für einen optimalen Abfluss von Kaffeeextrakt eine Lochsieb-Konfiguration bilden können. Derartige Penetrationselemente sind beispielsweise aus der WO 2008/087099 oder der WO 2008/023057 bekannt geworden.

Vorteilhaft kann es sein, wenn der Stempel lösbar am Boden der Kavität des Kapselhalters befestigbar ist. Der Stempel kann beispielsweise eine Bohrung aufweisen, durch die eine Befestigungsschraube zum Fixieren des Stempels im Verschlussteil durchführbar ist. Eine solche Anordnung hat den Vorteil, dass die Vorrichtung auf einfache Art und Weise je nach Bedarf mit unterschiedlich geformten und/oder hohen Stempeln ausrüstbar ist.

Weitere Vorteile und Einzelmerkmale der Erfindung ergeben sich aus den nachstehend beschriebenen Ausführungsbeispielen und aus den Zeichnungen. Es zeigen:
- Figur 1: einen Längsschnitt durch eine Brühvorrichtung und eine darin eingelegte Kapsel in Offenstellung,
- Figur 2: die Brühvorrichtung gemäss Figur 1 in Schliessstellung,
- Figur 3: die Brühvorrichtung gemäss Figur 1 in Brüh- bzw. Extraktionsstellung,
- Figur 4: eine Detailansicht der Kapsel zwischen zwei Kammerteilen der Vorrichtung in Offenstellung,
- Figur 5: die Kapsel nach dem Schliessen der Kammerteile in gegenüber Figur 4 nochmals leicht vergrösserten Darstellung,
- Figur 5a: eine Variante zu Figur 5,
- Figur 6: die Kapsel während dem Brühvorgang,
- Figur 6a: Eine Variante zu Figur 6,
- Figur 7: einen Kapselkörper für die erfindungsgemässe Kapsel,
- Figur 8: eine stark vergrösserte Detailansicht aus Figur 7 auf einen Teil des Bodens der Kapsel,
- Figur 9: eine mit einer Substanz befüllte Kapsel mit dem Kapselkörper gemäss Figur 7 und einer Deckelfolie,
- Figur 10: eine Querschnittsdarstellung aufeinander gestapelter Kapselkörper,
- Figur 11: eine perspektivische Darstellung des Kapselkörpers in einer Vorderansicht,
- Figur 12: eine perspektivische Rückansicht auf den Kapselkörper, und
- Figur 13: eine perspektivische Darstellung eines Mittels zum Penetrieren eines Bodens einer Kapsel.

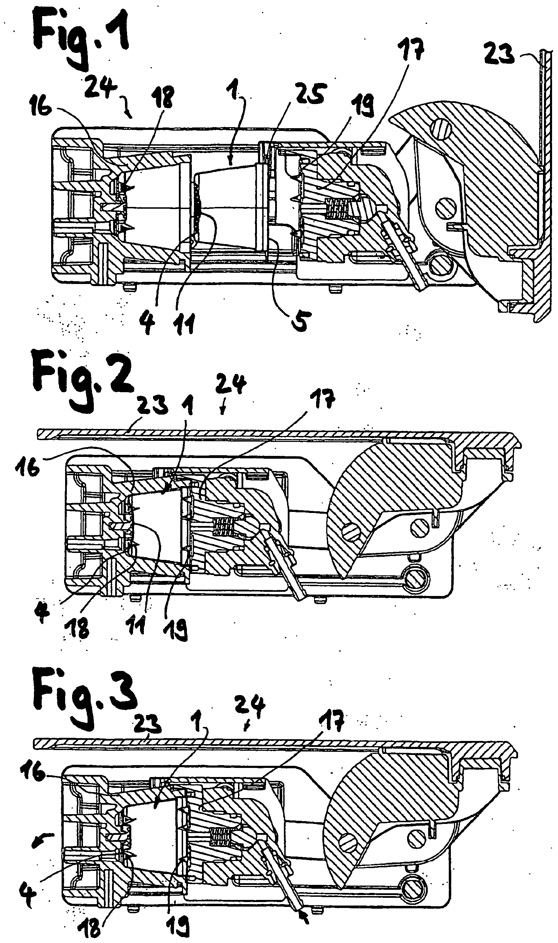

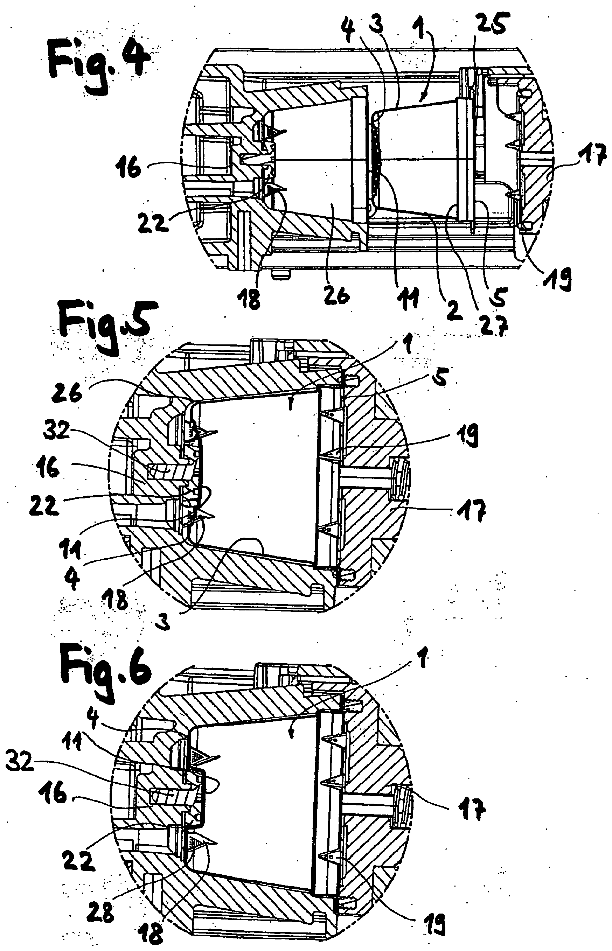

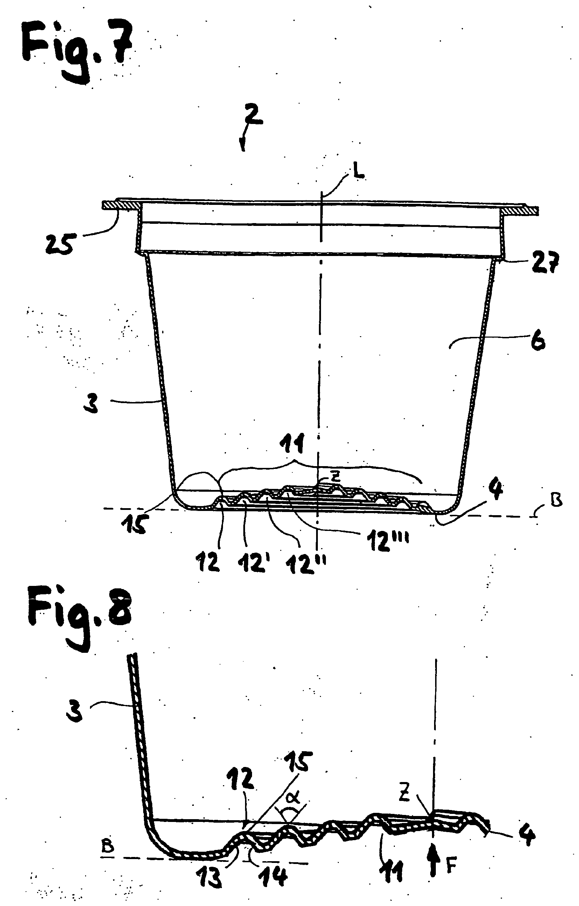

Figur 1 zeigt eine Vorrichtung 24 zum Brühen von Kaffee mit einer darin eingelegten, mit 1 bezeichneten Kapsel. Die Kapsel 1 weist einen Kapselkörper 2 auf, dessen Boden 4 balgartig ausgestaltet ist. Der Aufbau und die Funktions- und Wirkungsweise der mit einem Faltenbalg 11 versehene Kapsel 1 wird nachfolgend anhand der Figuren 4 bis 6 sowie vor allem anhand der Figuren 7 bis 12 im Detail beschrieben.

Die Vorrichtung 24 verfügt über zwei Kammerteile 16 und 17, die in axialer Richtung relativ zu einander verschiebbar sind. Beim vorliegenden Ausführungsbeispiel ist das als Verschlussteil ausgebildete Kammerteil 17 bewegbar, während das andere Kammerteil 16 feststehend in der Vorrichtung 24 angeordnet ist. Das Kammerteil 16 ist als Kapselaufnahme mit einer Kavität 26 ausgestaltet, in die die Kapsel 1 aufnehmbar ist. In der in Figur 1 gezeigten Ausgangsposition (Offenstellung) ist die Kapsel 1 zwischen dem Kapselhalter 16 und dem Verschlussteil 17 positioniert. Sowohl Kapselhalter 16 als auch Verschlussteil 17 weisen jeweils Penetrationselemente 18 bzw. 19 auf, mit denen der Boden der Kapsel bzw. ein Deckel 5 der Kapsel penetrierbar ist und durch die ein Extraktionsmedium durchleitbar ist. Die in Figur 1 gezeigten Penetrationselement sind aus der WO 2008/023057 bekannt geworden und dort ausführlich beschrieben. Grundsätzlich eignet sich die Kapsel 1 auch für andere Varianten von Penetrationselementen. Die Schliessbewegung wird manuell durch Betätigen eines Schwenkhebels 23 bewirkt. Die Vorrichtung 24 ist beispielhaft in horizontaler Ausrichtung in eine entsprechende Maschine eingebaut. Auch der in den Figuren 1 bis 3 gezeigte Schliessmechanismus stellt lediglich ein Beispiel dar und führt zu keiner Beschränkung des Schutzumfangs.

Figur 2 zeigt die Vorrichtung in einer Schliessstellung. Wie aus Figur 1 hervorgeht, wurde der Boden 4 der Kapsel 1 nach innen eingedrückt. Die Penetrationselemente 18 dringen in dieser Position erst teilweise in den Boden 4 ein. Eine vollständige Durchdringung des Bodens 4 ergibt sich erst in der Brühstellung, in der der Boden 4 der Kapsel infolge des Druckaufbaus in der Kapselkammer am Boden der Kavität des Kapselhalters 16 anliegt. Diese Stellung ist in Figur 3 gezeigt.

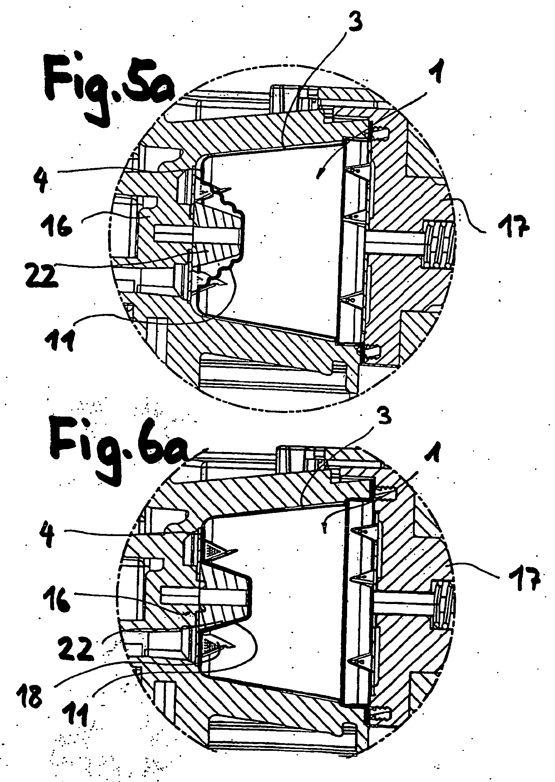

Die Figuren 4 bis 6 zeigen Detaildarstellungen der Kapsel 1 in unterschiedlichen Stellungen. Figur 4 zeigt die unbelastete Kapsel 1 (Kapsel in Ruhelage, Vorrichtung in Offenstellung); Figur 5 zeigt die Kapsel 1 nach dem Schliessvorgang, jedoch vor dem Aufbringen eines Brühdrucks; und Figur 6 zeigt die Kapsel 1 in der Extraktionsstellung. Aus Figur 4 ist beispielsweise deutlich erkennbar, dass die Kapsel 1 mit Hilfe einer (nicht näher beschriebenen) Positioniereinheit in einer horizontalen Lage zwischen den Kammerteilen 16 und 17 positioniert ist. Das als Kapselhalter ausgestaltete Kammerteil 16 verfügt über eine Kavität 26 zur Aufnahme der Kapsel. Nach dem Schliessvorgang ist die Kapsel 1 in der Kavität 26 des Kapselhalters 16 aufgenommen. Die injektionsseitigen Penetrationselemente 19 durchdringen in dieser Stellung den folienartigen Deckel 5 vollständig. Auf der gegenüber liegenden Seite hingegen fand erst eine teilweise Perforation statt. Der balgartige Abschnitt des Bodens 4 wurde vom Stempel 22 nach innen eingedrückt und liegt an der Stempeloberseite an. Der so nach innen eingedrückte Boden weist in dieser Stellung einen entfalteten Faltenbalg 11 auf. Die Penetrationselemente 18 durchdringen den Boden 4 nur teilweise. In diesem Ausführungsbeispiel ist zwar keine dem Stempel zugeordnete Schraubendruckfeder gezeigt. Optional wäre es aber denkbar, eine solche an der dem Boden der Kapsel zugewandten Seite des Stempels anzuordnen. Diese Schraubendruckfeder würde eine vom Boden der Kavität weggerichtete Kraft bewirken, welche das Ablösen der Kapsel aus dem Kapselhalter bzw. von den Penetrationselementen erleichtern würde.

Der Boden 4 der Kapsel 1 verfügt über einen mit 11 bezeichneten Faltenbalg, wodurch eine vorteilhafte Bodenflexibilität erreicht wird. Nach dem Injizieren eines Extraktionsfluids in die Kapsel 1, wird der Boden 4 der Kapsel gegen den Boden der Kavität des Kammerteils bewegt. Nach Überschreiten eines bestimmten Drucks in der Kapsel ist der Boden 4 formschlüssig und druckdicht gegen den Boden der Kavität gepresst. In dieser Brüh- oder Extraktionsstellung ist der maximale Abflussquerschnitt an den Filteröffnungen 28 der Penetrationselemente 18 erreicht. Der Extrakt fliesst danach durch Ablaufkanäle, wo er auf geeignete Weise aufgefangen und weggeleitet werden kann (in Figur 3 mit einem Pfeil angedeutet). Geschmacksproben haben überraschenderweise gezeigt, dass mit derartigen Kapseln gegenüber herkömmlichen Kapseln hervorragende Resultate erreicht werden können.

In den Figuren 5 und 6 ist sodann eine Senkkopfschraube 32 erkennbar, mit der der Stempel 22 in den Kapselhalter 16 einbaubar ist. Der Stempel 22 kann auf einfache Art und Weise demontiert und - falls gewünscht - durch einen anderen ersetzt oder ausgetauscht werden (vgl. nachfolgende Fig. 5a und 6a).

Die in den Figuren 5a und 6a dargestellte Vorrichtung zum Brühen von Kaffee oder anderen Getränken unterscheidet sich vom vorgängigen Ausführungsbeispiel nur durch einen verschieden ausgestalteten Stempel 22 (der Einfachheit halber ohne Befestigungsschraube dargestellt). Auch wird hier die gleiche Kapsel 1 verwendet. Der Stempel 22 ist als kegelstumpfförmige Erhebung ausgestaltet, wobei die Höhe des Stempels 22 in Richtung der Längsmittelachse gegenüber dem Ausführungsbeispiel gemäss Figur 5/6 deutlich grösser ist. Die Vorteile des Kapselbodens sind vor allem in Figur 5a gut erkennbar. Dank des Faltenbalgs 11 lässt sich der Boden 4 der Kapsel relativ tief in das Innere der Kapsel eindrücken. Das Kammervolumen kann also nochmals deutlich reduziert werden. Die Seitenwand 3 der Kapsel verbleibt dabei (mehr oder weniger) unverändert.

Die genaue konstruktive Ausgestaltung des Bodens 4 der Kapsel ist aus den Figuren 7 und 8 erkennbar. Der mit 2 bezeichnete Kapselkörper für die Kapsel ist als einstückiges Formteil aus Kunststoff ausgestaltet und weist einen Kragen 25, die daran anschliessende Seitenwand 3 und den Boden 4 auf. Der Kapselkörper 2 ist um eine Längsmittelachse L rotationssymmetrisch ausgebildet und kann beispielsweise in einem Tiefziehverfahren oder in einem Spritzgussverfahren hergestellt werden. Er besteht vorzugsweise aus einem Kunststoffmaterial wie z.B. Polypropylen. Auch andere Materialen oder Laminate sind ohne weiteres denkbar. Theoretisch könnte er sogar aus einem metallischen Material wie z.B. Aluminium bestehen.

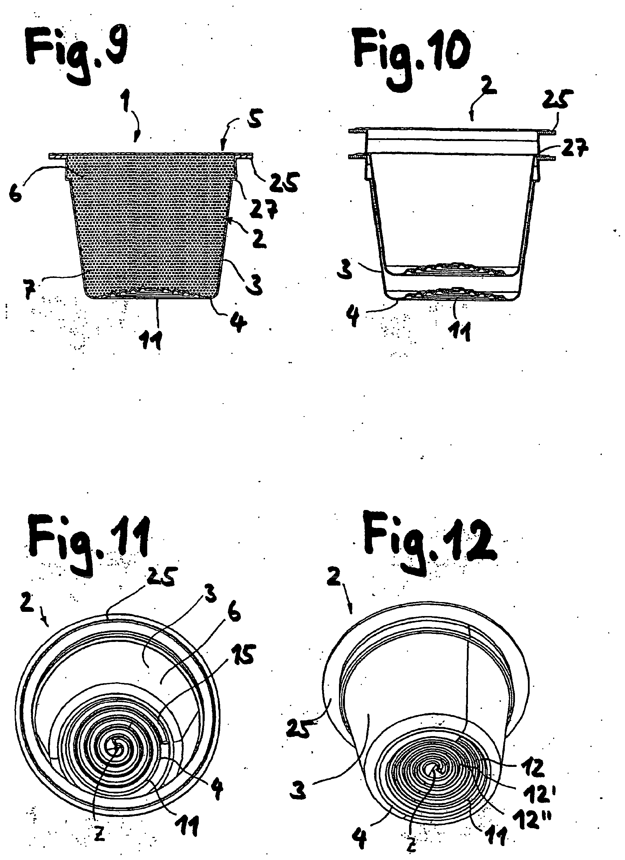

Der Boden 4 liegt auf einer mit B angedeutete Bodenebene. Im Boden 4 ist ein Faltenbalg 11 angeordnet, der durch V-förmige Rinnen gebildet wird. Die Faltenpaare des Faltenbalgs 11 sind mit 12, 12', 12" und 12"' bezeichnet und umgeben die mit Z bezeichnete Bodenmitte. Die jeweiligen Faltenpaare 12, 12', 12" und 12"' können auf konzentrischen Kreisen um die Bodenmitte Z angeordnet sein oder wie im vorliegenden Ausführungsbeispiel eine Spirale bilden. Die spiralförmige Ausgestaltung des Faltenbalgs 11 ist insbesondere in Figur 12, aber auch in Figur 11 gut erkennbar. Figur 12 zeigt, dass die Faltenpaare 12, 12', 12" und 12"' ineinander übergehen.

Jedes Faltenpaar 12 verfügt über zwei nach innen bzw. in Richtung des Deckels gerichtete Flankenwände 13 und 14. Der durch die Flankenwände 13, 14 gebildete Winkel ist mit α bezeichnet, der im vorliegenden Ausführungsbeispiel ca. 80° beträgt. Vorteilhaft ist es, wenn die Flankenwände 13, 14 spitz aufeinander zulaufen, wodurch eine grosse Flexibilität des Bodens sichergestellt ist. Der Winkel α könnte im extremen Fall aber auch sogar bis zu 169° betragen, wobei sich jedoch Bereiche zwischen 60° und 120° als besonders vorteilhaft in Tests erwiesen haben.

Aus Figur 7 ist sodann erkennbar, dass der Faltenbalg 11 in der Ruhelage leicht nach innen gewölbt ist. Eine solche konkave Ausgestaltung des Bodens hat den Vorteil, dass durch Krafteinwirkung von aussen der Faltenbalg einfach nach innen eindrückbar ist. Diese Krafteinwirkung ist in Figur 8 mit dem Pfeil F angedeutet.

Figur 9 zeigt eine fertige Kapsel 1 in einer Ruhelage, die in einer (hier nicht gezeigt) Brühvorrichtung verwendet werden kann. Die Kapsel 1 weist einen Kapselkörper 2 auf, der im Bereich des Kragens 25 aromadicht durch den Deckel 5 verschlossen ist. Der Deckel 5, der vorzugsweise ebenfalls aus Kunststoffmaterial besteht, ist am Kapselkörper angeschweisst oder angeklebt. In der Kammer 6 befindet sich eine Substanz 7. Bei der Substanz 7 kann es sich beispielsweise um Kaffeepulver oder um Tee handeln, wobei beim Durchströmen der Kapsel mit heissem Wasser ein Extraktionsprozess stattfindet. Bei der Substanz 7 könnte es sich aber beispielsweise auch um einen Trockenextrakt handeln, der beim Durchströmen mit heissem oder mit kaltem Wasser vollständig in Lösung übergeht, so dass zuletzt keine Rückstände in der Kapsel verbleiben. Denkbar wäre z.B. ein Trockenextrakt für die Herstellung eines Fruchtgetränks oder einer Bouillon. Die Substanz 7 liegt auf der einen Seite unmittelbar und ohne zusätzliche Filterschicht auf dem Boden 4 der Kapsel 1 auf; auf der anderen Seite reicht die Füllung 7 bis zum folienartigen Deckel. Wird der Faltenbalg 11 des Bodens 4 der vollständig gefüllten Kapsel 1 nach innen eingedrückt, so wird bei der Verwendung der vorgängig beschriebenen Vorrichtung die Substanz 7 kurz vor dem eigentlichen Brühvorgang komprimiert. Die Filtrierung während des Brühvorgangs erfolgt vorzugsweise durch die in die Kapsel eindringenden (hier nicht dargestellten) Penetrationselemente. Grundsätzlich wäre es aber auch denkbar, die Kammer der Kapsel nicht vollständig mit einer Substanz zu füllen und stattdessen einen Hohlraum zuzulassen. Weiterhin ist vorstellbar, dass für bestimmte Verwendungszwecke anstatt einer Komprimierung eine Entspannung der Substanz, d.h. also eine Vergrösserung des Kammervolumens wünschenswert ist. Auch hierfür wäre diese oder eine ähnliche Kapsel geeignet. Für diesen letzteren Fall könnte es vorteilhaft sein, wenn der Faltenbalg etwa gerade oder sogar konvex nach aussen gewölbt wäre.

In Figur 10 sind zwei Kapselkörper 2 erkennbar, die über einen Stapelrand 27 aufeinander gestapelt sind. In einer solchen Anordnung können die Kapselkörper 2 einfach und effizient zu einer Abfüllstation transportiert werden. Aus den perspektivischen Darstellungen der Figuren 11 und 12 ist die spiralförmige Ausgestaltung des Faltenbalgs 11 erkennbar.

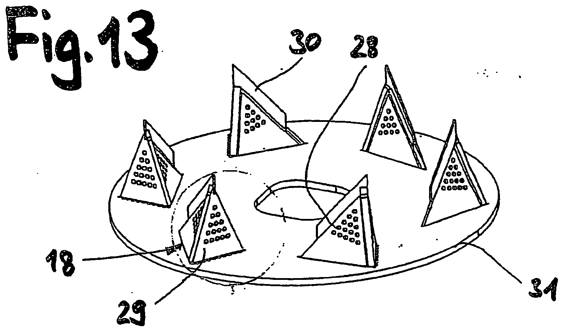

In Figur 13 ist ein Beispiel für das Penetrationsmittel 31 vergrössert dargestellt. Das Penetrationsmittel besteht aus einer flachen Scheibe, auf der kreisringförmig mehrere zeltartige bzw. pyramidenförmige Penetrationselemente 18 angeordnet sind. Diese bestehen aus Lochseitenwänden 29, welche gegen die Penetrationsrichtung geneigt sind, wobei jeweils eine Seitenwand aus dem Material der Scheibe ausgestanzt und aufgerichtet sein kann. Die beiden übrigen Lochseitenwände werden danach aufgesetzt und mit der Scheibe bzw. mit der aufgerichteten Lochseitenwand verschweisst. Um ein noch leichteres Penetrieren des Kapselbodens zu erreichen, können zusätzliche Messerschneiden 30 eingefügt sein. Die Lochseitenwände 29 können dabei sehr feine Filteröffnungen 28 aufweisen. Die so gebildeten Penetrationskörper dringen leicht in den Balg der Kapsel ein und bewirken einen raschen Abfluss der Flüssigkeit mit sehr guter Siebwirkung.

## Patentansprüche

1. Kapsel (1), bestehend aus einem vorzugsweise rotationssymmetrisch ausgebildeten Kapselkörper (2) mit einer Seitenwand (3) und mit einem einstückig mit dieser ausgebildeten Boden (4), sowie mit einem den Kapselkörper abdeckenden Deckel (5) zur Bildung einer geschlossenen Kammer (6), welche eine Trockensubstanz (7) für die Zubereitung eines Getränks durch einen Brühvorgang enthält, wobei der Deckel und der Boden für die Durchleitung einer Flüssigkeit durch die Kammer in einer Vorrichtung für die Zubereitung eines Getränks mit ausserhalb der Kapsel angeordneten Mitteln (18,19) penetrierbar sind, wobei der Boden (4) derart flexibel ausgestaltet ist, dass er durch Krafteinwirkung verformbar ist, **dadurch gekennzeichnet, dass** der Boden (4) in einer Ruhelage wenigstens abschnittsweise balgartig ausgestaltet ist, wobei die balgartige Konfiguration des Bodens (4) durch einen Faltenbalg (11) gebildet wird.

2. Kapsel nach Anspruch 1, **dadurch gekennzeichnet, dass** der Faltenbalg (11) wenigstens ein Faltenpaar (12,12',12", 12''') mit zwei in Richtung des Deckels gerichtete und in einem vorzugsweise spitzen Winkel (α) miteinander verbundene Flankenwände (13,14) aufweist, die eine innere Faltlinie (15) bilden.

3. Kapsel nach Anspruch 1 oder 2, **dadurch gekennzeichnet, dass** der Faltenbalg (11) in der Draufsicht in Bezug auf die Bodenmitte (Z) als Spirale ausgestaltet ist oder dass der Faltenbalg (11) eine Mehrzahl von Faltenpaaren (12, 12', 12", 12''') aufweist, deren Faltlinien (15) auf konzentrischen Kreisen liegen.

4. Vorrichtung mit einer Kapsel (1) nach einem der Ansprüche 1 bis 3 für die Zubereitung eines Getränks mit zwei zur Bildung einer geschlossenen Kammer gegeneinander pressbaren Kammerteilen, wobei ein Kammerteil als Kapselhalter (16) mit einer Kavität zur Aufnahme einer Kapsel und das andere Kammerteil als Verschlussteil (17) zum Verschliessen der Kavität ausgebildet ist und wobei der Boden der Kavität ein Mittel enthaltend vorzugsweise mehrere Penetrationselemente (18) zum Penetrieren des Bodens (4) der Kapsel (1) aufweist und das Verschlussteil ebenfalls mit Penetrationselementen (19) versehen ist, derart, dass bei geschlossener Kavität die darin angeordnete Kapsel (1) am Boden (4) und am Deckel (5) zum Durchleiten einer Flüssigkeit penetrierbar ist.

5. Vorrichtung nach Anspruch 4, **dadurch gekennzeichnet, dass** wenigstens ein Penetrationselement (18) im Bereich des Faltenbalgs (11) am Boden (4) angreift.

6. Vorrichtung nach Anspruch 4 oder 5, **dadurch gekennzeichnet, dass** sie einen Stempel (22) vorzugsweise in Form einer zentralen Erhebung zum Eindrücken des balgartig ausgestalteten Abschnitts des Bodens aufweist.

7. Vorrichtung nach Anspruch 6, **dadurch gekennzeichnet, dass** der Stempel (22) lösbar am Boden der Kavität des Kapselhalters (16) befestigbar oder befestigt ist.

## Claims

1. Capsule (1) consisting of a preferably rotationally symmetrically formed capsule body (2) with a side wall (3) and with a base (4) formed integrally with the latter, and also with a lid (5) which covers the capsule body and is intended for forming a closed chamber (6), which contains a dry substance (7) for preparing a drink by an infusion process, wherein, for the passage of a liquid through the chamber in a device for preparing a drink, the lid and the base are penetrable by means (18, 19) arranged outside the capsule, wherein the base (4) is designed in a flexible manner such that said base is deformable by means of the action of a force, **characterized in that**, in a rest position, the base (4) is at least partially designed in the manner of a bellows, wherein the bellows-like configuration of the base (4) is formed by an expansion bellows (11).

2. Capsule according to Claim 1, **characterized in that** the expansion bellows (11) has at least one pair of folds (12, 12', 12", 12''') with two flank walls (13, 14) which are directed towards the lid, are connected to each other at a preferably acute angle (α) and form an inner folding line (15).

3. Capsule according to Claim 1 or 2, **characterized in that** the expansion bellows (11) is designed in the form of a spiral in the top view with respect to the base centre (Z), or **in that** the expansion bellows (11) has a plurality of pairs of folds (12, 12', 12", 12"'), the folding lines (15) of which lie on concentric circles.

4. Device with a capsule (1) according to one of Claims 1 to 3 for preparing a drink, with two chamber parts which are pressable against each other in order to form a closed chamber, wherein one chamber part is designed as a capsule holder (16) with a cavity for receiving a capsule, and the other chamber part is designed as a closure part (17) for closing the cavity, and wherein the base of the cavity has a means preferably containing a plurality of penetration elements (18) for penetrating the base (4) of the capsule (1), and the closure part is likewise provided with penetration elements (19) in such a manner that, when the cavity is closed, the capsule (1) arranged therein is penetrable at the base (4) and at the lid (5) for the passage of a liquid.

5. Device according to Claim 4, **characterized in that** at least one penetration element (18) in the region of the expansion bellows (11) acts on the base (4).

6. Device according to Claim 4 or 5, **characterized in that** said device has a punch (22), preferably in the form of a central elevation, for pushing **in that** section of the base which is designed in the manner of a bellows.

7. Device according to Claim 6, **characterized in that** the punch (22) is fastenable or is fastened releasably to the base of the cavity of the capsule holder (16).

## Revendications

1. Capsule (1) constituée d'un corps de capsule (2) de préférence à symétrie de révolution, comprenant une paroi latérale (3) et un fond (4) réalisé d'un seul tenant avec celle-ci, ainsi qu'un couvercle (5) recouvrant le corps de capsule pour former une chambre fermée (6) qui contient une substance sèche (7) pour la préparation d'une boisson par un processus de percolation, le couvercle et le fond pouvant être pénétrés par des moyens (18, 19) disposés à l'extérieur de la capsule pour le passage d'un liquide à travers la chambre dans un dispositif pour la préparation d'une boisson, le fond (4) étant configuré de manière flexible de telle sorte qu'il puisse être déformé sous l'action d'une force, **caractérisée en ce que** le fond (4) est configuré au moins en partie en forme de soufflet dans une position de repos, la configuration en forme de soufflet du fond (4) étant formée par un soufflet plissé (11).

2. Capsule selon la revendication 1, **caractérisée en ce que** le soufflet plissé (11) comprend au moins une paire de plis (12, 12', 12", 12''') présentant deux parois de flanc (13, 14) orientées en direction du couvercle et reliées l'une à l'autre suivant un angle de préférence aigu (α), lesquelles parois de flanc forment une ligne de pliage intérieure (15).

3. Capsule selon la revendication 1 ou 2, **caractérisée en ce que** le soufflet plissé (11) est configuré, en vue de dessus, sous forme de spirale par rapport au milieu du fond (Z) ou **en ce que** le soufflet plissé (11) comprend une pluralité de paires de plis (12, 12', 12", 12''') dont les lignes de pliage (15) se situent sur des cercles concentriques.

4. Dispositif comprenant une capsule (1) selon l'une quelconque des revendications 1 à 3 pour la préparation d'une boisson, comprenant deux parties de chambre pouvant être pressées l'une contre l'autre pour former une chambre fermée, une partie de chambre étant réalisée sous forme de support de capsule (16) comprenant une cavité pour recevoir une capsule et l'autre partie de chambre étant réalisée sous forme de partie de fermeture (17) pour fermer la cavité, et le fond de la cavité comprenant un moyen comportant de préférence plusieurs éléments de pénétration (18) pour pénétrer dans le fond (4) de la capsule (1) et la partie de fermeture étant également pourvue d'éléments de pénétration (19), de telle sorte que, lorsque la cavité est fermée, la capsule (1) qui y est disposée puisse être pénétrée au niveau du fond (4) et du couvercle (5) pour le passage d'un liquide.

5. Dispositif selon la revendication 4, **caractérisé en ce qu'**au moins un élément de pénétration (18) vient en prise avec le fond (4) dans la région du soufflet plissé (11).

6. Dispositif selon la revendication 4 ou 5, **caractérisé en ce qu'**il comprend un poinçon (22) de préférence sous forme d'un rehaussement central pour enfoncer la section du fond configurée en forme de soufflet.

7. Dispositif selon la revendication 6, **caractérisé en ce que** le poinçon (22) peut être fixé ou est fixé de manière amovible au fond de la cavité du support de capsule (16).
